# EUROPÄISCHE PATENTSCHRIFT

(11) **EP 0 898 500 B1**
(45) Veröffentlichungstag und Bekanntmachung des Hinweises auf die Patenterteilung: **19.09.2001**
(21) Anmeldenummer: 97921733.8
(22) Anmeldetag: 24.04.1997
(51) Int. Cl.: B07C 3/00, G06K 19/077

(54) **VORRICHTUNG ZUR ÜBERWACHUNG DES TRANSPORTPROZESSES VON FLACHEN SENDUNGEN**
DEVICE FOR MONITORING THE TRANSPORT PROCESS OF FLAT DESPATCHES
DISPOSITIF POUR SURVEILLER LE PROCESSUS DE TRANSPORT D'ENVOIS PLATS

(30) Priorität: 13.05.1996 DE 19619068
(43) Veröffentlichungstag der Anmeldung: 03.03.1999
(73) Patentinhaber: Siemens Dematic AG, 90475 Nürnberg (DE)
(72) Erfinder: POWOLLIK, Dieter, D-10319 Berlin (DE); VOSS, Frank, D-12623 Berlin (DE); KARER, Frank, D-15569 Woltersdorf (DE)
(74) Vertreter: Zedlitz, Peter, Dipl.-Inf.
(86) Internationale Anmeldenummer: EP9702084
(87) Internationale Veröffentlichungsnummer: WO9743055

(56) Entgegenhaltungen:
- EP-A- 0 743 615
- DE-C- 4 217 266
- DE-C- 4 238 102
- US-A- 3 438 489
- US-A- 3 750 167
- US-A- 4 058 217

## Beschreibung

Die vorliegende Erfindung bezieht sich auf das Gebiet Analyse und Qualitätskontrolle von Transportprozessen, in denen Sendungen bearbeitet und transportiert werden, und bei denen Teile der Bearbeitung, insbesondere Sortierprozesse, maschinell erfolgen.
Ein herausragendes Anwendungsgebiet der Erfindung ist die Analyse und Qualitätskontrolle von Briefbeförderungs- und bearbeitungsprozessen mittels objektiver, direkt im Prozeß gewonnener Meßdaten.
Im engeren Sinne bezieht sich die Erfindung auf sogenannte elektronische Briefe, d.h. Sendungen mit elektronischen Komponenten, üblichen maschinell bearbeitbaren Briefformaten. Solche Vorrichtungen sind in der Lage, die aus ihrer Umgebung auf sie einwirkenden physikalischen Größen, wie z. B. Beschleunigung, Temperatur, elektrische und magnetische Felder, zu erfassen, in elektronische Signale zu wandeln, diese Signale zu verarbeiten und als Daten zu speichern und erfordern keine Veränderungen oder Ergänzungen der technischen Ausrüstungen des Transportprozesses und beeinflussen diesen auch nicht.

Die Auswertung der von elektronischen Briefen aufgezeichneten Daten ermöglichen es den zeitlichen Verlauf des Transportes des elektronischen Briefes im Briefbeförderungs- und bearbeitungsprozeß zu analysieren. Damit können genaue Rückschlüsse über die Einhaltung von Vorschriften, Regeln und Betriebsparametern in den verschiedenen Schritten des Briefbeförderungs- und bearbeitungsprozeßes gezogen, Schwachstellen gefunden und analysiert und somit bei hinreichend großen Stichproben genaue Daten über den Briefbeförderungs- und Bearbeitungsprozeß gewonnen werden. Briefbearbeitungsmaschinen sind so konstruiert und justiert, daß sie die übergroße Mehrzahl von Briefen mit großer Zuverlässigkeit, Leistung und Effektivität bearbeiten. Die so bearbeitbaren Briefe werden hier als Normalbriefe bezeichnet. Sie sind durch folgende Merkmale gekennzeichnet:
- Die Dimensionen in Länge und Breite entsprechen denen standardisierter oder durch die nationalen Postverwaltungen oder privater Postdienste zugelassener Briefformate.
- Die Dicke des Normalbriefes liegt häufig im Bereich bis zu 2 mm. Für die maschinelle Bearbeitung sind Briefe mit 5 bis 6 mm Dicke zugelassen.
- Das Dickenprofil ist über den gesamten Normalbrief konstant und nimmt nur in den Randbereichen ab.
- Die Masse des Normalbriefes ist üblicherweise kleiner als 20 g. Es sind aber Massen von 50 bis 60 g aufgrund der verwendbaren Formate und Briefdicke möglich und für die Maschinenbearbeitung zugelassen.
- Die Dichte des Normalbriefes ist über die Fläche homogen.
- Die Nachgiebigkeit der Briefoberfläche ist, da der Brief üblicherweise Papier enthält, gering.
- Die Flexibilität/Biegsamkeit ist homogen, anisotrop und hoch.
- Flächen- und Massenschwerpunkt von Normalbriefen stimmen überein.
- Normalbriefe werden bei der maschinellen Bearbeitung nicht plastisch verformt.
- Je nach Maschinenauslegung ist es für den Normalbrief unerheblich, ob er in Haupt- oder Nebenförderrichtung gefördert wird.
   Dabei verläuft die Hauptförderrichtung entlang der langen und die Nebenförderrichtung entlang der kurzen Kanten des Briefformates.
- Kodes, die von Briefbearbeitungsmaschinen mit unterschiedlichen Druckverfahren (z.B. Tintenstrahl, Thermotransfer) zum Kodieren von Leitwegen aufgebracht werden, sind maschinenlesbar.
- Normalbriefe werden in vorgelagerten manuellen Bearbeitungsschritten (Preculling) aufgrund ihres visuellen und taktilen Eindrucks nicht vom Bedienpersonal aussortiert.

Ein wesentliches Kriterium zur technischen Bewertung von Briefen ist die Maschineneignung. Normalbriefe sind maschinengeeignet.
Neben den Normalbriefen sind Briefe für die Bearbeitung durch Maschinen zugelassen, die bezüglich ihrer physikalischen Eigenschaften (z.B. Briefdicke, Steifigkeit/Biegsamkeit, Massenschwerpunktslage, Masse) in einem oder mehreren Fällen Grenzbereiche erreichen, so daß sie nur noch bedingt maschinengeeignet sind, daß also ihre Maschineneignung beeinträchtigt ist. Das äußert sich darin, daß sie häufiger als Normalbriefe ausgeschleust oder Teilfunktionen der Maschinen häufiger gestört oder nicht regelgerecht ausgeführt werden oder zu höherem Verschleiß bestimmter Teile der Maschine führen. Außerdem hängt die Maschineneignung solcher Briefe besonders von der Justage und dem Wartungszustand der Maschinen ab. Diese bedingte Maschineneignung ist insbesondere dann gegeben, wenn Briefe in verbreiteten Briefbearbeitungsmaschinen häufiger als Normalbriefe
- in Formattrenn- und Aufstellmaschinen wegen zu großer Dikke und/oder Steifigkeit ausgeschieden werden
- zu Staus (jams) im Brieflauf oder an Weichen oder an Vereinzelungseinrichtungen führen oder die Förderstrecke unkontrolliert verlassen
- zu Fehlern beim Einstapeln in Staplern (Stackern) oder Fächern führen
- Stempelaufdrucke mit beeinträchtigter Lesbarkeit aufweisen
- Kodeaufdrucke mit beeinträchtigter Maschinenlesbarkeit aufweisen
- manuelle Korrekturen des Stapels in Zwischenstaplern erforderlich machen
- zu erhöhtem Verschleiß, oder Beschädigung von Teilen der Maschinen führen.

Weiterhin gibt es Briefe und andere Sendungen, die aufgrund ihrer physikalischen Eigenschaften, z. B. Abmessungen, Briefdicke, Dickenprofil, Steifigkeit/Biegsamkeit, Massenschwerpunktslage, Masse, manuell vor oder maschinell zu Beginn der Bearbeitung (z.B. im Formattrenn- und Aufstellbereich) immer ausgeschieden werden. Solche Briefe sind nicht maschinengeeignet.

Eine weiteres wesentliches Kriterium zur technischen Bewertung von Briefen, das insbesondere auf elektronische Briefe zutrifft, die maschinen geeignet sind, ist die Maschinenfestigkeit. Sie sagt aus, in welchem Maße und wie häufig Briefe während der Bearbeitung durch die Maschine beschädigt oder zerstört werden. Bei Normalbriefen kommt es sehr selten vor, daß sie z. B. eingerissen, zerrissen oder zerknittert werden. Für elektronische Briefe ist es aufgrund ihres Aufbaus offensichtlich, daß sie bei nicht beanspruchungsgerechter Gestaltung häufiger in ihrer Funktion gestört, beschädigt, in ihrer Lebensdauer herabgesetzt oder zerstört werden können.

Besonders nachteilig wirken sich auf die Maschinenfestigkeit elektronischer Briefe aus:
- Riemenzugkräfte, Stoß-, Schock-, und Schlagkräfte im Brieflauf in Hauptförderrichtung
- Riemenzugkräfte, Stoß-, Schock-, und Schlagkräfte im Brieflauf in Nebenförderrichtung
- Biegekräfte an Umlenkrollen und Weichen
- Beschleunigungen bei Abzug und Vereinzelung
- Bremsbeschleunigungen beim Einstapeln in Fächer, Stapler oder Zwischenstapler
- Druckkräfte beim Stempeln.

Damit die oben beschriebene Verwendung von elektronischen Briefen keinen Einschränkungen unterliegt, müssen sie ausnahmslos alle Teilprozesse durchlaufen können, ohne von einzelnen Prozeßschritten ausgesondert, in ihrer Funktion gestört oder gar zerstört zu werden. Eine Aussonderung in einzelnen Prozeßschritten würde zu einer Art und Weise der weiteren Bearbeitung führen, die nicht mehr repräsentativ für den zu untersuchenden Prozeß ist. Die Zuverlässigkeit von so aufgenommenen Daten und der daraus abgeleiteten Qualitätskennziffern würde eingeschränkt und damit ihr Wert für die Beurteilung der Qualität des Briefbeförderungs- und bearbeitungsprozeß gemindert.

Bereits bekannt ist aus der DE-OS 42 38 102 eine Vorrichtung zur Ermittlung von Laufzeiten von Briefen, bei der ca. 3/4 der Gesamtfläche des elektronischen Briefes aus zwei starren Leiterkartenteilen bestehen, die so angeordnet sind, daß die Schaltung und die Stromversorgung relativ ungeschützt allen mechanischen Einwirkungen der maschinellen Bearbeitung ausgesetzt sind und leicht zerstört werden können. Die flexiblen Teile erstrecken sich über die gesamte Breite der Leiterkartenteile. Diese Vorrichtung weist aufgrund der hohen mechanischen Beanstandungen bei der mechanischen Bearbeitung, der Stempelung sowie der nicht im notwendigen Maße vorhandenen Maschineneignung wie Normalbriefe keine Verarbeitungssicherheit über einen längeren Zeitraum auf.

Die Aufgabe der Erfindung besteht darin, eine Vorrichtung zu schaffen, die sich in allen Prozeßschritten der Briefbeförderung und -bearbeitung wie ein normaler Brief aus Papier verhält, der durch alle üblichen Briefbearbeitungsmaschinen bearbeitet werden kann und so die Zuverlässigkeit der gewonnenen Daten im Briefbeförderungs- und bearbeitungsprozeß sowie eine Erhöhung der Funktionssicherheit und Nutzungsdauer ermöglicht.
Die Aufgabe wird erfindungsgemäß durch die Merkmale des Patentanspruches 1 gelöst. Vorteilhafte Ausgestaltungen der Erfindung sind in den Unteransprüchen angegeben.

Die Vorteile der erfindungsgemäßen Vorrichtung sind besonders in ihrer Anwendung unter den extremen mechanischen Belastungen der maschinellen Bearbeitung von Briefen zu sehen.

Die Vorrichtung ist für die Bearbeitung durch übliche Maschinen wie ein Normalbrief geeignet, durch geringe Modifikationen auch in andere Formate integrierbar. Die Maschinenfestigkeit ist so gestaltet, daß die Lebensdauer im Mittel 2 Jahre beträgt oder 1000 Maschinendurchläufen verschiedener und üblicherweise verwendeter Maschinen ohne Funktionsstörungen ausgesetzt werden kann.

Der Erfindung liegt die Erkenntnis zu Grunde, daß es nicht notwendig ist, alle Eigenschaften von Normalbriefen vollständig auf elektronische Briefe abzubilden, um vergleichbare Maschineneignung und Maschinenfestigkeit wie von Normalbriefen zu erreichen, sondern, daß es ausreichend ist, diese Eigenschaften nur in bestimmten Flächenbereichen (im weiteren als Zonen bezeichnet) einzuhalten.

Im folgenden wird die Erfindung mittels Zeichnungen genaue beschrieben.
Dabei zeigt
- FIG 1: die Zoneneinteilung für eine erfindungsgemäße Vorrichtung,
- FIG 2: eine erfindungsgemäße Vorrichtung mit drei starren Komponenten,
- FIG 3: eine erfindungsgemäße Vorrichtung mit vier starren Komponenten.

Die erfindungsgemäße Vorrichtung weist zumindest eine Sensoreinrichtung, eine Speichereinrichtung und eine Auswerteeinrichtung auf.

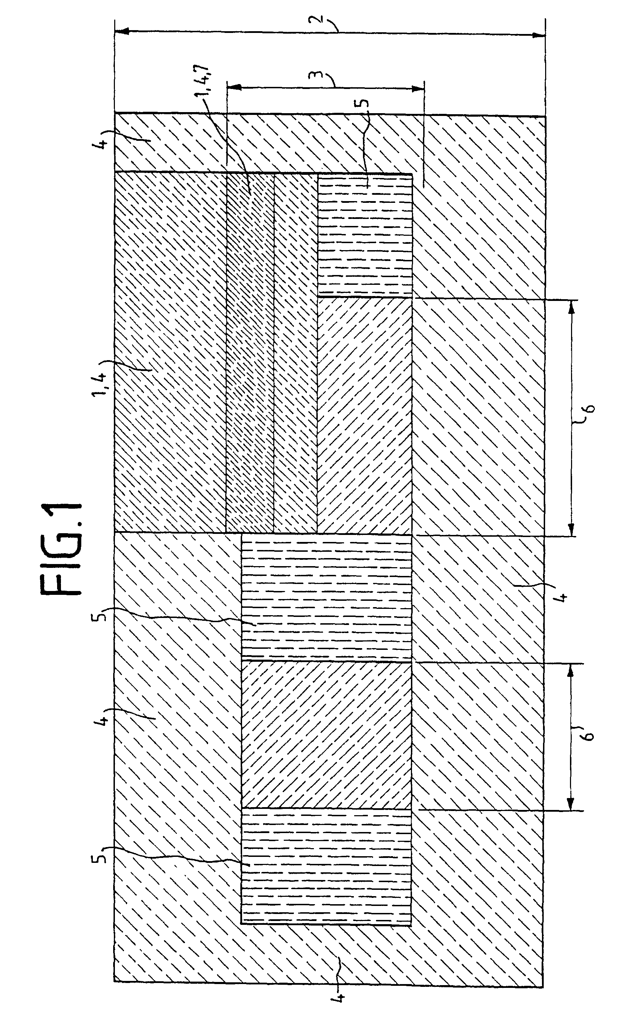

Die Stempelzone 1 in FIG 1 darf nicht von einer Komponentenzone überlappt werden, da die harten Kanten der Komponentenzone die Stempelmechanismen beschädigen können. Die Stempelzone muß so groß sein, daß alle üblichen Stempel incl. der Werbeklischees dort appliziert werden können.

Die Stempelzone wird aus einem geeigneten flexiblen Polstermaterial geschlossenzelliger Schaumstoff mit einer Dichte von 45 kg/m3 und einer Stauchhärte nach DIN 53577 bei 40% Kompression zwischen 65 und 95 kPa mit vorwiegend konstanter Dicke aufgebaut. Dieses Material wird in Bezug auf seine Druckfestigkeit speziell für diese Anforderungen ausgewählt. Die Stempelzone kann in Teilen auch stufen- oder keilförmig aufgebaut sein, insbesondere dann, wenn es die Überdeckung mit einer Puffer- und Einlaufzone erfordert. Der mittels aller "handelsüblichen" Stempelvorrichtungen auf den Umschlag aufgebrachte Stempelabdruck muß gut lesbar sein, d.h. das Polstermaterial darf nicht zu weich sein. Das Polstermaterial muß mindestens 1000 Stempelungen typische Kraft von bis zu 300 N auf einen Rollstempel mit 28 mm Durchmesser ertragen ohne seine prozeßrelevanten Eigenschaften, d. h. Stauchhärte, Flexibilität, Homogenität bzw. seine Dicke dauerhaft wesentlich zu ändern.

In üblichen Briefbearbeitungsmaschinen, insbesondere in von nationalen Postverwaltungen bzw. Postdiensten eingesetzten Hochleistungsmaschinen, werden im sogenannten Brieflauf, in dem der Brief z.B. durch Einwirkung von Transportriemen, Transportbändern u./o. Rollen gefördert wird, typischerweise Riemen bzw. Bänder mit 20 bis 140 mm Breite eingesetzt. Dabei wirken Riemenkräfte über unterschiedliche Umschlingungswinkel (typischerweise 1 bis 30 Grad) an den Umlenkrollen auf die transportierten Briefe und somit auch auf den elektronischen Brief ein. Es kommen sowohl starre Riemen bzw. Bänder z.T. mit separater Zugschicht als auch elastische Riemen oder Bänder in unterschiedlichen Breiten zu Einsatz. Der elektronische Brief erfährt im Brieflauf ebenfalls Biege-, Knick-, Vibrations-, Schlag- und Stoßbeanspruchungen.
Ist die verwendete Riemenbreite so groß, daß der gesamte elektronische Brief vom Riemen erfaßt wird, also die Riemenlaufzone (2) in FIG 1 alle anderen Zonen überdeckt, so ist es ausreichend, wenn das Dickenprofil so gestaltet ist, daß es nach den Briefkanten hin abfällt, wie es sich auch aus den Eigenschaften der Puffer- und Randzone ergibt.
Jedoch sind weltweit bei nationalen Postverwaltungen und bei Postdiensten Briefbearbeitungsmaschinen am weitesten verbreitet, die die Sendungen im Brieflauf zwischen 35 mm breiten Riemen in Haupttransportrichtung fördern. Dabei werden typische Briefformate, z.B. die DIN-Formate C6 und DL bzw. das amerikanische Format #10, ungefähr mittig zwischen den Riemen transportiert. Das DIN-Format DL ist auch das Format der Ausführungsbeispiele des elektronischen Briefes. Die im Brieflauf auf den elektronischen Brief einwirkenden Kräfte werden durch diese überwiegend 35 mm breiten Riemen auf ihn übertragen. Deshalb wird dieser Bereich des Briefes auch als Hauptriemenlaufzone 3 bezeichnet.
Zum Schutz der Elemente in den Komponentenzonen durch gleichmäßige Verteilung der einwirkenden Kräfte auf die gesamte Riemenlaufzone, ist es deshalb notwendig, das Dickenprofil im diesem Bereich vollständig oder überwiegend konstant zu halten. Ausgenommen davon sind Überdeckungen mit Puffer- und Einlaufzonen.

Eine Puffer- und Einlaufzone 4 in FIG 1 erstreckt sich von einer Kante des elektronischen Briefes bis zu einer parallelen Kante eines umschreibenden Rechteckes einer Komponentenzone. Sie wird aus flexiblem Polstermaterial gefertigt, das eine zweckdienliche Stauchhärte aufweist, so daß insbesondere beim maschinellen Einstapeln keine briefuntypischen Effekte, wie z.B. Abprallen von Fach- oder Stapelwänden, auftreten. Weiterhin verhindern die mit einem keil- oder stufenförmig ausgebildeten Dickenprofil versehenen Puffer- und Einlaufzonen Beeinträchtigungen insbesondere beim Vereinzeln von Briefen oder auch bei Dicken- und Steifigkeitsausscheidungen , da auch hier ein "weicheres", d.h. papierbriefähnlicheres Einlaufen gewährleistet wird.
Die Dicke der Puffer- und Einlaufzone ist an der Grenze zur Komponentenzone gleich der der Komponentenzone.
Wenn der Anstieg des Dickenprofiles idealerweise als Keil angenommen im Mittel kleiner gleich 1:3 ist, ist gewährleistet, daß keine Beeinträchtigungen auftreten. Das bedeutet, daß bei einem überwiegend konstanten Dickenprofil der Komponentenzone von 4 mm die Puffer- und Einlaufzone mindestens 12 mm breit sein muß.
Eine Mindermenge der derzeitig weltweit eingesetzten Briefbearbeitungsmaschinen fördert Sendungen in Nebenförderrichtung. Weiterhin werden Sendungen, insbesondere in Formattrennmaschinen aufgrund des stochastischen Prozesses des Aufstellens der Briefe unerwünschterweise z.T. in Neben-Förderrichtung transportiert. Aus diesen Gründen besitzt der elektronische Brief nicht nur an den Schmalseiten, sondern umlaufend auf allen vier Seiten Puffer- und Einlaufzonen.

Eine Komponentenzone 5 in FIG 1 enthält elektronischen Elemente einschließlich der Stromversorgung, die zur Ausführung der eigentlichen Funktion des elektronischen Briefes erforderlich sind.
Eine Komponentenzone ist gegenüber dem Normalbrief dadurch gekennzeichnet, daß sie nicht biegsam sondern starr ist, und daß das Dickenprofil überwiegend größer als 2 mm ist und lokal bis zu 5 mm erreichen kann.
Bei der Verteilung der Massen auf die Komponentenzonen und ihrer Plazierung im elektronischen Brief ist die Übereinstimmung des Masseschwerpunktes mit dem Flächenschwerpunkt einzuhalten. Jedoch führen Abweichungen des Masseschwerpunktes von 6% bezogen auf die jeweilige halbe Kantenlänge des Briefformates bei einer Gesamtmasse von ca. 30 g noch nicht zur Beeinträchtigung der Maschineneignung.
Die Komponentenzone sollte sich nicht mit Teilen der Stempelzone oder der Puffer- und Einlaufzone überdecken, um die elektronischen Elemente vor den extremen mechanischen Belastungen in diesen Bereichen zu schützen.

Die Dimensionen des umschreibenden Rechtecks einer beliebig geformten Komponentenzone werden durch das gewählte Briefformat und die Einhaltung der Eigenschaften von Stempelzone, Puffer- und Einlaufzone und Biege- und Knickzone eingeschränkt.
Eine weitere Einschränkung erfährt die Kantenlänge, die parallel zur Haupttransportrichtung liegt, durch die in Briefbearbeitungsmaschinen übliche Steifigkeits- oder kombinierte Dicken- und Steifigkeitsausschleusung. Bei einem überwiegenden Dickenprofil von 4 mm der Komponentenzone wird bei einer Kantenlänge bis zu 40 mm die Maschineneignung wegen erhöhter Aussonderungsraten gegenüber Normalbriefen nicht beeinträchtigt.
Dicken von ca. 4 mm und Kantenlängen der Komponentenzonen ab 60 mm führen wegen des dynamischen Verhaltens der in bekannten Briefbearbeitungsanlagen ausgeführten Dicken und Steifigkeitsaussonderung mit Sicherheit zur Beeinträchtigung der Maschineneignung und erhöhten Aufwendungen zum Erreichen der notwendigen Maschinenfestigkeit, die wiederum zur weiteren Verringerung der Maschineneignung z.B. wegen vergrößerter Dicke oder Masse führen.
Die Maschinenfestigkeit läßt sich z. B. beim Einsatz von starren Leiterkarten und Anwendung der SMD-Technologie bei der Einhaltung der o.g. Abmessung insbesondere durch aufwandsarmen Verguß statt durch vollständige Verkappung oder Einhäusung erreichen.

Ragen Bereiche der Komponentenzone über die Größe des überwiegenden Dickenprofils (z.B. 4 mm) hinaus, so muß die Kantenlänge dieser Bereiche entsprechend verkürzt werden.
Die Kantenlänge der Komponentenzone, die parallel zur Nebentransportrichtung liegt, kann bis zu 25 % länger sein als die parallel zur Haupttransportrichtung verlaufende Kante, ohne die Maschineneignung oder die Maschinenfestigkeit zu beeinträchtigen.

Werden zur Stromversorgung des elektronischen Briefes Knopfzellen in einer Komponentenzone angeordnet und sind diese in der Briefebene senkrecht zur Flächennormalen des Briefes zu wechseln, so ist die Öffnung der Batteriehalterung parallel zur Haupttransportrichtung zu legen. Somit wirken beim Beschleunigen und insbesondere beim schlagartigen Abbremsen (z. B. maschinelles Abstapeln in Fächer oder in Stapelvorrichtungen) Masseträgheitskräfte nicht in Richtung Batterieschlitz und damit nicht gegen die Federkräfte, die die Batterie in der Batteriehalterung fixieren. Eine Verschiebung der Batterie in Richtung Batterieschlitz und die dadurch mögliche Trennung der elektrischen Kontakte wird verhindert.

Je zwei benachbarte Komponentenzonen werden durch eine Biege- und Knickzone 6 in FIG 1 getrennt. Biege- und Knickzonen haben die Aufgabe, die in der maschinellen Briefbearbeitung erforderliche Flexibilität des elektronischen Briefes sicherzustellen. Dann erscheint der elektronische Brief aus der "Sicht der Maschine" wie ein Normalbrief, d.h. er wird z.B. in maschinellen Steifigkeitsaussonderung nicht als zu steif ausgeschleust. Diese Zonen sorgen dafür, daß die resultierenden Kräfte und Momente, die durch Umlenkung der Riemen an Umlenkrollen entstehen und auf den elektronischen Brief einwirken nicht zu groß werden, und daß insbesondere keine erhöhten Hebelwirkungen mit daraus resultierenden Biegemomenten auf die Komponentenzonen wirken. In ihr sind auch die Verbindungselemente für die beiden Komponentenzonen enthalten. Die Biegsamkeit und die Biegewechselfestigkeit der Verbindungselemente muß größer oder gleich der des Polstermaterials in der Biege- und Knickzone sein.

Die Dicke der Biege- und Knickzone ist an der Grenze zu einer Komponentenzone gleich der dieser Komponentenzone und größer oder gleich der der eingeschlossenen Verbindungselemente. Außerhalb der Hauptriemenzone werden Dickenunterschiede keil- oder stufenförmig ausgeglichen. Innerhalb der Hauptriemenzone ist das Dickenprofil überwiegend konstant zu halten.
Bezogen auf die Haupttransportrichtung ist ab einer Kantenlänge der Biege- und Knickzone, die größer oder gleich der Hälfte der Länge der größten angrenzenden Komponentenzonenkante ist, eine hinreichende Maschineneignung gegeben.

Die Printerzone 7 in FIG 1 ist eine spezielle Zone mit verminderter Nachgiebigkeit der Briefoberfläche, damit auch Zielinformationen mittels berührender Stiftdruckvorrichtungen ohne Informationsverlust aufgebracht werden können und maschinenlesbar sind. Diese Druckvorrichtungen werden in ausgewählten Briefbearbeitungsmaschinen eingesetzt.
Printerzonen können sich auf der gesamten Oberfläche des Briefes befinden. Ihre genaue Lage und Größe hängt von den Standards nationaler Postverwaltungen oder privater Postdienste ab. Die geforderte Nachgiebigkeit der Oberfläche wird durch die Auswahl eines geeigneten Polstermaterials und falls erforderlich eine zusätzliche feste Folie in Bereichen von Puffer- und Einlaufzonen und Biege- und Knickzone erreicht. Ist die Puffer- und Einlaufzone groß genug, kann auch nur die feste Folie eingesetzt werden. Auf jeden darf die erforderliche Flexibilität von Puffer- und Einlaufzonen oder Biege- und Knickzonen nicht wesentlich verringert werden.
Die Printerzone kann auch teilweise Komponentenzonen überdekken. Das führt jedoch im Bereich der Übergänge von Komponentenzone zu Printerzone zu Beeinträchtigungen der Printqualität, also der Maschineneignung.

Elektrische Verbindungen zwischen Komponentenzonen sind als Schraubenfedern ausgeführt, die für die Maschineneignung notwendige Biegsamkeit, Biegewechselfestigkeit und Knickfähigkeit insbesondere an den Übergängen zwischen Komponentenzone und Knick- und Biegezone aufweisen.
Für elektronische Briefe, die maschinengeeignet und maschinenfest sind und damit eine hohe Lebensdauer haben, werden diese Schraubenfedern im Bereich der Biege- und Knickzone mit einem ausreichend biegsamen und festen Schlauch z.B. aus Silicon überzogen.

Eine weitere Möglichkeit der Verbindung von starren Komponenten ist die Verwendung von starrflexen Leiterkarten. Werden die starren Komponenten entlang der Hauptförderrichtung positioniert, so wird eine hinreichende Maschinenfestigkeit der Verbindungen des elektronischen Briefes insbesondere an den Übergängen von den starren zu den flexiblen Bereichen der Leiterplatte erreicht, wenn die Verbindungsleitungen die starren Teile der Leiterplatten an den parallel zur Hauptförderrichtung liegenden Kanten und von dort vorzugsweise senkrecht dazu verlassen.

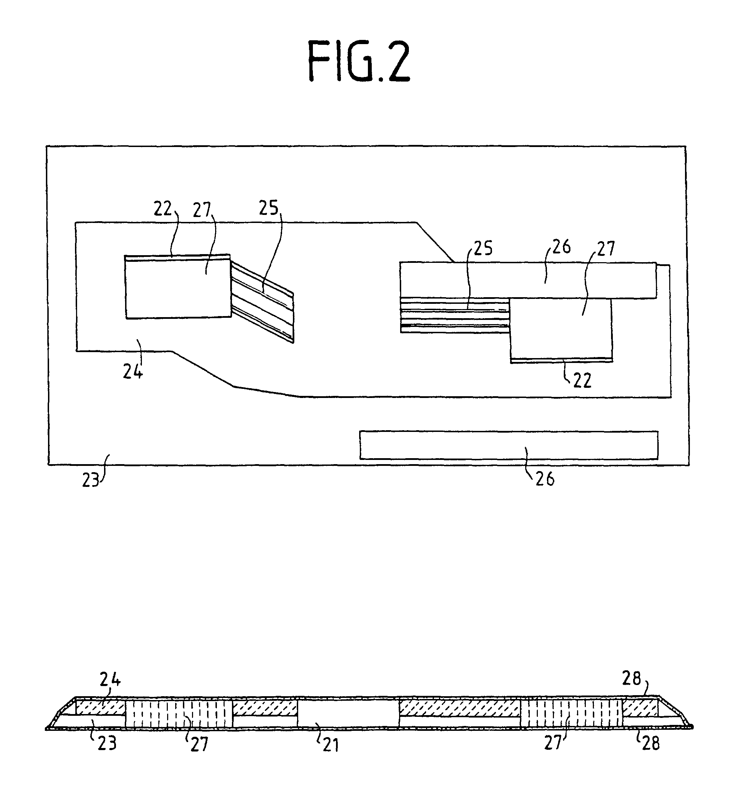

Das Ausführungsbeispiel 1 nach FIG 2 beschreibt eine Lösung eines maschinengeeigneten und maschinenfesten elektronischen Brief für das Standardformat DL. Dieses Ausführungsbeispiel enthält die folgenden drei Komponentenzonen:
- Leiterplatte 21
- zwei Batteriefächer 22

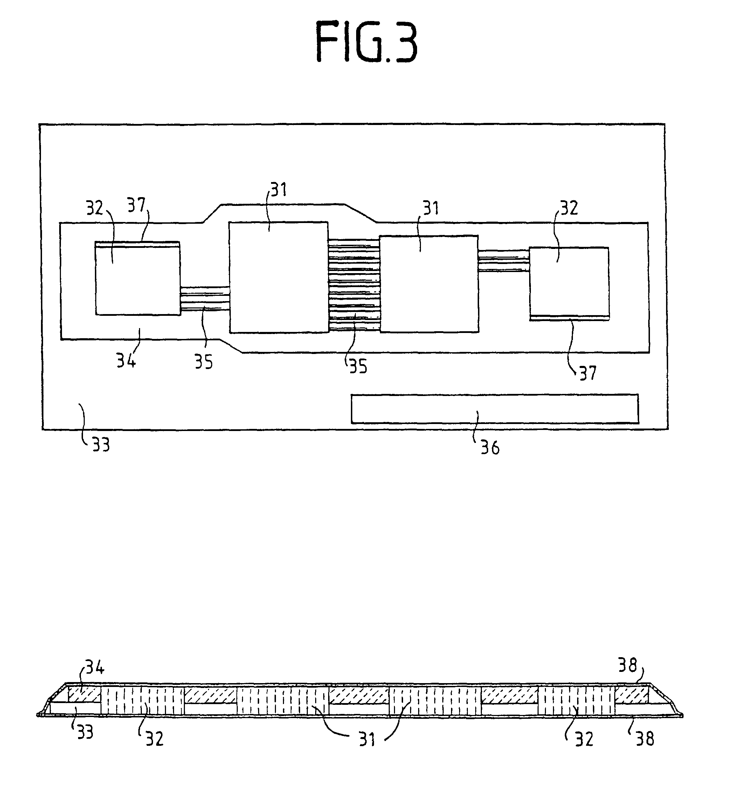

Ein wesentliches Kriterium für die Verteilung der Komponentenzonen in der Anordnung ist neben den oben beschriebenen allgemeinen Anforderungen an die Zonenaufteilung für maschinengeeignete und maschinenfeste elektronischen Briefe die Realisierung von zwei Printzonen 26 mit vorgegebenen Lageorientierungen und Abmessungen. Da eine Überdeckung der Printerzonen mit Komponentenzonen vermieden werden soll, ist die außermittige Lage der Leiterplatte 21 durch die vorgegebene Anordnung der oberen Printerzone gegeben. Die Übereinstimmung von Massenschwerpunkt und Flächenschwerpunkt innerhalb eines hinreichenden Toleranzbandes wird durch die gewählte Lage der beiden anderen Komponentenzonen 22 der Batteriefächer erzielt, wobei zu beachten ist, daß die maximale Höhe der Oberkante der rechten Komponentenzone ebenfalls durch die Lage der oberen Printerzone definiert wird. Mit dieser Anordnung kann bei einer Dimensionierung der Leiterplatte von 35 mm x 42 mm eine hinreichend große Stempelzone mit eingeschlossener oberer Printerzone erreicht werden.
Für das Design der Puffer- und Einlaufzonen gilt analog die Beschreibung des Ausführungsbeispiels gemäß FIG 3.
Die obere Printerzone wird durch eine zusätzlich auf das die Komponentenzonen umgebende Schaumstoffpolster aufgebrachte feste Folie im Bereiche der Biege- und Knickzone zwischen der zentralen 21 und der rechten Komponentenzone 22 gebildet, die in die rechte Puffer- und Einlaufzonen hineinragt.
Da die untere Puffer- und Einlaufzone groß genug ist, wird die untere Printerzone durch eine feste Folie ohne Schaumstoffpolster gebildet. Durch diese Lösung wird gesichert, daß sich die erforderliche Flexibilität der Puffer- und Einlaufzonen und der Biege- und Knickzonen durch die vorgegebenen Printerzonen nicht wesentlich verringert.
Der elektronische Brief hat eine Masse einschließlich der beiden Batterien von ca. 30 g. Das Dickenprofil in der Hauptriemenzone ist konstant ca. 4,5 mm. Das Dickenprofil der elektronischen Komponenten wird einerseits durch Verguß mit einer halbflexiblen und andererseits mit einem Füllstoff geringer Dichte ausgeglichen. Die Biege- und Knickzonen werden innerhalb der Hauptriemenzone durch ein Schaumstoffpolster gebildet, das in der Dicke etwa der der Komponentenzonen entspricht. Eine funktional wesentliche Eigenschaft des gewählten Schaumstoffes ist ein geringer Druckverformungsrest, d.h. bis 10% bei 48 h 20% Verformung, 30 min. Entspannung.

Im Ausführungsbeispiel gemäß FIG 3 ist ein elektronischer Brief für das Standardformat DL aufgebaut. Ein Designkriterium ist, die elektronischen Elemente auf vier Komponentenzonen mit etwa gleicher Fläche zu verteilen. Die aus funktioneller Sicht zu verwendenden Batterien bestimmen die kleinste für eine starre Komponente benötigte Fläche. Die Batteriehalterungen 32 sind so konstruiert, daß sie den Flächenbedarf nur unwesentlich erhöhen und die Abmessungen ihrer Kantenlängen unkritisch bezüglich des Ausschleuseverhaltens bekannter Dikken- und Steifigkeitsaussonderungen sind. Die Batteriehalterungen werden zentralsymmetrisch in den Außenbereichen des Briefes plaziert. Damit wird die Anzahl der Verbindungsleitungen minimiert und die Übereinstimmung von Flächen- und Masseschwerpunkt gesichert. Die Öffnung zum Wechseln der Batterien 37 liegt parallel zur Hauptförderrichtung und erlaubt das Wechseln der Batterien in der Briefebene.
Die übrigen elektronischen Elemente werden so auf zwei weitere Komponentenzonen verteilt, daß eine möglichst große Stempelzone vgl. 1 in FIG 1 entsteht, die Anzahl der erforderlichen Verbindungsleitungen 35 minimiert wird und der Massevom Flächenschwerpunkt nur unkritisch abweicht. Die Breite dieser Komponentenzonen 31 von je 35 mm weicht nur unwesentlich von der der Batteriehalterungen ab und erlaubt damit die Gleichverteilung der starren Komponenten auf der Briefbreite abzüglich der beiden Puffer- und Einlaufzonen an den Stirnseiten. Die resultierenden Biege- und Knickzonen 36 sind 17 mm breit. Das Breitenverhältnis zur Komponentenzone (≤ 0,5) ist unkritisch bezüglich des dynamischen Verhaltens der in bekannten Briefbearbeitungsanlagen ausgeführten Dikken- und Steifigkeitsaussonderung.
Die Puffer- und Einlaufzonen 33 an den Stirnseiten des Briefes sind gestuft aufgebaut und erreichen mit einer Breite des Klebefalzes der Deckfolie von 4 mm (ca. 0,5 mm dick), einem 2 mm dicken Polsterstoff von 6 mm Breite und einem 4 mm dicken Polsterstoffverbund von 6 mm Breite die Höhe der Batteriehalterungen von ca. 4 mm bei einer Gesamtbreite von 16 mm. Die Puffer- und Einlaufzonen können wegen der geringen Höhe der starren Komponenten unkritisch breit gehalten werden.

Der elektronische Brief hat eine Masse einschließlich der beiden Batterien von ca. 36 g. Das Dickenprofil in der Hauptriemenzone ist konstant ca. 4,5 mm. Das Dickenprofil der elektronischen Komponenten wird einerseits durch Verguß mit einer halbflexiblen und andererseits mit einem Füllstoff geringer Dichte ausgeglichen.
Die Printzone 36 wird durch Modifikation der Puffer- und Einlaufzone an dieser Stelle ausgebildet. Dazu wird das Polstermaterial im Bereich der Printzone durch eine Folie mit ausreichender Flexibilität und fester Oberfläche ersetzt.

## Patentansprüche

1. Vorrichtung zur Überwachung des Tranportprozesses von flachen Sendungen, welche als flache Sendung ausgebildet ist, mit einer Sensoreinrichtung, einer Speichereinrichtung, einer Auswerteeinrichtung und einer Stromversorgung, die sich in einer oder mehreren als starre Bereiche ausgeführten Komponentenzonen befinden, bei der
- zwischen den Komponentenzonen (5) flexible Biege- und Knickzonen (6) vorhanden sind, die flexibles Polstermaterial und flexible, elektrische Verbindungselemente für die Komponenten aufweisen, und die in Haupttransportrichtung jeweils mindestens halb so lang wie die Länge der größten, angrenzenden Komponentenzone (5) sind,
- eine gepolsterte Stempelzone (1) mit einer den Stempeldrücken angepaßten Druckfestigkeit vorhanden ist, die mit anderen Zonen außer den Komponentenzonen (5) Überlappungen aufweisen können,
- eine Puffer- und Einlaufzone (4) aus flexiblem Polstermaterial vorhanden ist, die sich von den Umfangskanten der Vorrichtung bis zu den Komponentenzonen (5) und den Biege- und Knickzonen (6) erstreckt, wobei die Dicke der Puffer- und Einlaufzone (4) an den Grenzen zu den Komponentenzonen (5) und Biege- und Knickzonen (6) etwa gleich der Dicke dieser Zonen ist und zu den Umfangskanten hin abnimmt,
- die Lage der Komponentenzonen (5) und die Verteilung der Massen auf den Komponentenzonen (5) derart ist, daß die Lage des Massenschwerpunktes und des Flächenschwerpunktes der Vorrichtung bezogen auf die halbe Länge und die halbe Breite der Vorrichtung nicht mehr als 6% voneinander abweicht.

2. Vorrichtung nach Anspruch 1, bei der die Dickenabnahme der Puffer- und Einlaufzone (4) über die Länge kleiner gleich 1:3 ist.

3. Vorrichtung nach Anspruch 1, bei der eine Riemenlaufzone (2,3) vorhanden ist, die mindestens starre Komponentenzonen (5) und Biege- und Knickzonen (6) enthält, wobei der Bereich mit den Komponentenzonen (5) und Biege- und Knickzonen (6) ein annähernd konstantes Dickenprofil aufweist.

4. Vorrichtung nach Anspruch 1, bei der die Biegsamkeit und Biegewechselfestigkeit der flexiblen elektrischen Verbindungselemente größer oder gleich der des Polstermaterials ist.

5. Vorrichtung nach einem der Ansprüche 1 bis 4, bei der eine oder mehrere Printerzonen (7) mit verminderter Nachgiebigkeit vorgesehen sind, damit mittels berührender Druckvorrichtungen Informationen auf die Oberfläche der Vorrichtung aufgebracht werden können.

6. Vorrichtung nach Anspruch 1 und 4, bei der als elastische Verbindungen zwischen den Komponentenzonen (5) Schraubenfedern vorgesehen sind.

7. Vorrichtung nach Anspruch 1 oder 3, bei der als elektrische Verbindungen zwischen den Komponentenzonen (5) starr-flexible Leiterkarten vorgesehen sind.

## Claims

1. Device for monitoring the transport process of flat consignments, which takes the form of a flat consignment, with a sensor means, a storage means, an evaluation means and a power supply, which are located in one or more component zones designed as rigid regions, in which device
- between the component zones (5), there are flexible bending and folding zones (6) which have flexible upholstery material and flexible electrical connecting elements for the components and which are in each case, in the main transport direction, at least half as long as the length of the largest adjacent component zone (5),
- there is an upholstered stamp zone (1) with a compressive strength which is matched to the stamp pressures and which can have overlaps with other zones in addition to the component zones (5),
- there is a buffer and entry zone (4) made of flexible upholstery material, which extends from the circumferential edges of the device as far as the component zones (5) and the bending and folding zones (6), the thickness of the buffer and entry zone (4) at the boundaries with the component zones (5) and bending and folding zones (6) being approximately equal to the thickness of these zones and decreasing towards the circumferential edges,
- the position of the component zones (5) and the distribution of the masses on the component zones (5) are such that the positions of the mass centre of gravity and of the surface centre of gravity of the device differ from one another by no more than 6% with respect to half the length and half the width of the device.

2. Device according to Claim 1, in which the decrease in thickness of the buffer and entry zone (4) over the length is lower than or equal to 1:3.

3. Device according to Claim 1, in which there is a belt running zone (2, 3) which contains at least rigid component zones (5) and bending and folding zones (6), the region with the component zones (5) and with bending and folding zones (6) having an approximately constant thickness profile.

4. Device according to Claim 1, in which the bendability and alternating bending strength of the flexible electrical connecting elements is higher than or equal to that of the upholstery material.

5. Device according to one of Claims 1 to 4, in which one or more printer zones (7) with reduced pliability are provided, so that information can be applied to the surface of the device by means of contact-type printing devices.

6. Device according to Claims 1 and 4, in which helical springs are provided as elastic connections between the component zones (5).

7. Device according to Claim 1 or 3, in which stiffly flexible printed circuit cards are provided as electrical connections between the component zones (5).

## Revendications

1. Dispositif pour surveiller le processus de transport d'envois plats, qui est réalisé sous forme d'envoi plat et qui comporte un organe de détection, un organe de mémorisation, un organe d'exploitation et une alimentation en courant, qui se trouvent dans une ou plusieurs zones de composants réalisées sous forme de régions rigides, dans lequel
- des zones (6) flexibles de pliage et d'inflexion se trouvent entre les zones (5) de composants et elles comportent du matériau flexible de rembourrage et des éléments flexibles de liaison électrique pour les composants et sont chacune, dans la direction de transport principale, d'une longueur égale au moins à la moitié de la longueur de la plus grande zone (5) limitrophe de composants,
- une zone (1) rembourrée de compostage est prévue, qui est d'une résistance en pression adaptée aux pressions de compostage et qui peut se trouver en chevauchement avec d'autres zones en dehors des zones (5) de composants,
- une zone (4) d'amortissement et d'entrée en matériau de rembourrage flexible est prévue, qui s'étend depuis les bords périphériques du dispositif jusqu'aux zones (5) de composants et aux zones (6) de pliage et d'inflexion, l'épaisseur de la zone (4) d'amortissement et d'entrée aux limites avec les zones (5) de composants et les zones (6) de pliage et d'inflexion étant environ égale à l'épaisseur de ces zones et diminuant vers les bords périphériques,
- la position des zones (5) de composants et la répartition des masses sur les zones (5) de composants étant telles que la position du centre de gravité de masse et celle du centre de gravité de surface du dispositif, par rapport à la demi-longueur et à la demi-largeur du dispositif, ne différent pas de plus de 6%.

2. Dispositif suivant la revendication 1, dans lequel la diminution d'épaisseur de la zone (4) d'amortissement et d'entrée est inférieure ou égale à 1:3 sur la longueur.

3. Dispositif suivant la revendication 1, dans lequel une zone (2, 3) de parcours de courroie est prévue, qui comporte au moins des zones (5) rigides de composants et des zones (6) de pliage et d'inflexion, la région pourvue des zones (5) de composants et des zones (6) de pliage et d'inflexion possédant un profil d'épaisseur approximativement constant.

4. Dispositif suivant la revendication 1, dans lequel la souplesse et la résistance aux flexions alternées des éléments flexibles de liaison électrique sont supérieures ou égales à celles du matériau de rembourrage.

5. Dispositif suivant l'une des revendications 1 à 4, dans lequel une ou plusieurs zones (7) d'impression d'élasticité réduite sont prévues, afin de pouvoir apposer des informations sur la surface du dispositif au moyen de dispositifs d'impression par contact.

6. Dispositif suivant les revendications 1 et 4, dans lequel des ressorts à boudin sont prévus comme liaisons élastiques entre les zones (5) de composants.

7. Dispositif suivant les revendications 1 et 3, dans lequel des cartes imprimées rigides-flexibles sont prévues comme liaisons électriques entre les zones (5) de composants.
